# EUROPEAN PATENT APPLICATION

(11) **EP 2 899 108 A1**
(43) Date of publication of application: **29.07.2015**
(21) Application number: 15152817.1
(22) Date of filing: 28.01.2015
(51) Int. Cl.: B62K 19/36

(54) **Seat post structure**

(30) Priority: 28.01.2014 TW 103103140
(71) Applicant: Chen, Tso-Tsai, Taipei City 10875 (TW)
(72) Inventor: Chen, Tso-Tsai, Taipei City 10875 (TW)
(74) Representative: Altenburg, Bernardus Stephanus Franciscus

(57) **Abstract**

The bicycle seat post structure (1, 1a, 1b) includes a seat post (10, 10a), a seat post clamp (20), and a positioning part (30, 30a). The seat post (10, 10a) includes two slots (11, 11a), and each slot (11, 11a) includes a first positioning end (111) and a second positioning end (112). The seat post clamp (20) connects to the seat post (10, 10a) in a lifting method. The seat post clamp (20) includes two holes (21), and the positions of the two holes (21) are corresponded to the slots (11, 11a). The positioning part (30, 30a) includes a positioning column (31), a fastening unit (32), and a corresponding fastening unit (33). The positioning column (31) is used for passing through the slots (11, 11a) and the holes (21). The fastening unit (32) connects to the positioning column (31). The corresponding fastening unit (33) fastens to the fastening unit (32).

## Description

### BACKGROUND OF THE INVENTION

### Field of the Invention

The present invention relates to a seat post structure; more particularly, the present invention relates to a seat post structure which is applied to a bicycle for user to quickly and easily adjust the height of seating while maintaining the saddle of the bicycle forward all the time.

### Description of the Related Art

Bicycle is widely used for transportation and exercise nowadays. Normally bicycle comes with saddle, seat post, and seat post clamp, forming as a seating system. Saddle is connected to seat post, while seat post is fixed by seat post clamp with lifting adjustment associated. Saddle is for user to sit on, and seat post is to provide the height of seating so that user can sit on the saddle comfortably.

In most bicycles of the prior art, seat post and seat post clamp are both shaped as a round tube; therefore, when user needs to adjust the height of seating, the connection of seat post and seat post clamp may be slightly twisted along the rounded shape surface often the time so that saddle cannot be hold aligned forward with the center line of a bicycle properly to ensure user's comfort. In the assembly process of seat post clamp and seat post of a bicycle of the prior art, user needs to carefully maintain saddle aligned forward with bicycle all the time. Because of the necessity to keep saddle aligned forward with bicycle while adjusting the height of seating as desired, user cannot quickly and easily change the height of seating based on the structure of seat post and seat post clamp of a bicycle of the prior art.

Therefore, there is a need to provide new structure of seat post and seat post clamp for user to quickly and easily adjust the height of seating while maintaining the saddle forward all the time.

### SUMMARY OF THE INVENTION

The objective of the present invention is to provide a new seat post structure, wherein the seat post structure is applied to a bicycle, for user to quickly and easily adjust the height of seating while maintaining the saddle aligned forward with the center line of a bicycle all the time.

To achieve the objective mentioned above, a new seat post structure is invented to be applied to bicycles. The seat post structure includes a seat post, a seat post clamp, and a positioning part. The seat post has two slots on both sides, and each slot includes a first positioning end and a second positioning end. The seat post clamp connects with the seat post to provide fixture and lifting adjustment. The seat post clamp includes two holes at the position corresponding to the two slots on the seat post. The positioning part includes a positioning column, a fastening unit, and a corresponding fastening unit. The positioning column is used for passing through the slots and the holes. The fastening unit connects with the positioning column and the corresponding fastening unit fastens to the fastening unit. In addition, through the invented structure mentioned above, the saddle can be lifted along an aligned direction forward, while the seat post can be secured to be used with the minimum insertion length considered, as well as reduced risk to be stolen.

According to one embodiment of the present invention, the seat post clamp further associates to two holes and at least one gap and a tube wall. The two holes and at least one gap are located on the tube wall.

According to one embodiment of the present invention, the seat post structure further associates to a tightening part. The tightening part is used for tightening the tube wall such that the positioning column passing through the two holes and the two slots is hold within the tube wall for positioning.

According to one embodiment of the present invention, the slot further includes at least one auxiliary positioning groove, and the at least one auxiliary positioning groove is located between the first positioning end and the second positioning end.

According to one embodiment of the present invention, the amount of the at least one gap is two.

Another objective of the present invention is to provide a bicycle with all or partial of the invention ingredients implemented for user to quickly and easily adjust the height of seating while maintaining the saddle forward with the minimum components associated.

To achieve the objective mentioned above, a bicycle example of the present invention includes a saddle and a seat post structure. The seat post structure is connected to the saddle to provide the height of seating. The seat post structure includes a seat post, a seat post clamp, and a positioning part. The seat post has two slots on both sides, and each slot includes a first positioning end and a second positioning end. The seat post clamp connects with the seat post to provide fixture and lifting adjustment. The seat post clamp includes two holes at the position corresponding to the two slots on the seat post. The positioning part includes a positioning column, a fastening unit, and a corresponding fastening unit. The positioning column is used for passing through the slots and the holes. The fastening unit connects with the positioning column and the corresponding fastening unit fastens to the fastening unit. Through the invented structure mentioned above, the saddle can be lifted along an aligned direction forward, between the maximum and minimum of the seating height, with minimum insertion length considered, while the seat post structure can reduce the risk of quick-released saddle and seat post combination to be stolen in the meanwhile.

### BRIEF DESCRIPTION OF THE DRAWINGS

FIG. 1 illustrates a schematic drawing of a bicycle example of the first embodiment of the present invention.
FIG. 2 illustrates a schematic drawing of the seat post structure of the first embodiment of the present invention.
FIG. 3 illustrates an exploded perspective view of the seat post structure of the first embodiment of the present invention.
FIG. 4 illustrates a schematic drawing of the seat post structure in the maximum position (raised up) of the first embodiment of the present invention.
FIG. 5 illustrates a schematic drawing of the seat post structure in the minimum position (lowered down) of the first embodiment of the present invention.
FIG. 6 illustrates a schematic drawing of the seat post structure of the second embodiment of the present invention.
FIG. 7 illustrates a schematic drawing of the seat post structure of the third embodiment of the present invention.

### DETAILED DESCRIPTION OF THE PREFERRED EMBODIMENT

These and other objects and advantages of the present invention will become apparent from the following description of the accompanying drawings, which disclose several embodiments of the present invention. It is to be understood that the drawings are to be used for purposes of illustration only, and not as a definition of the invention.

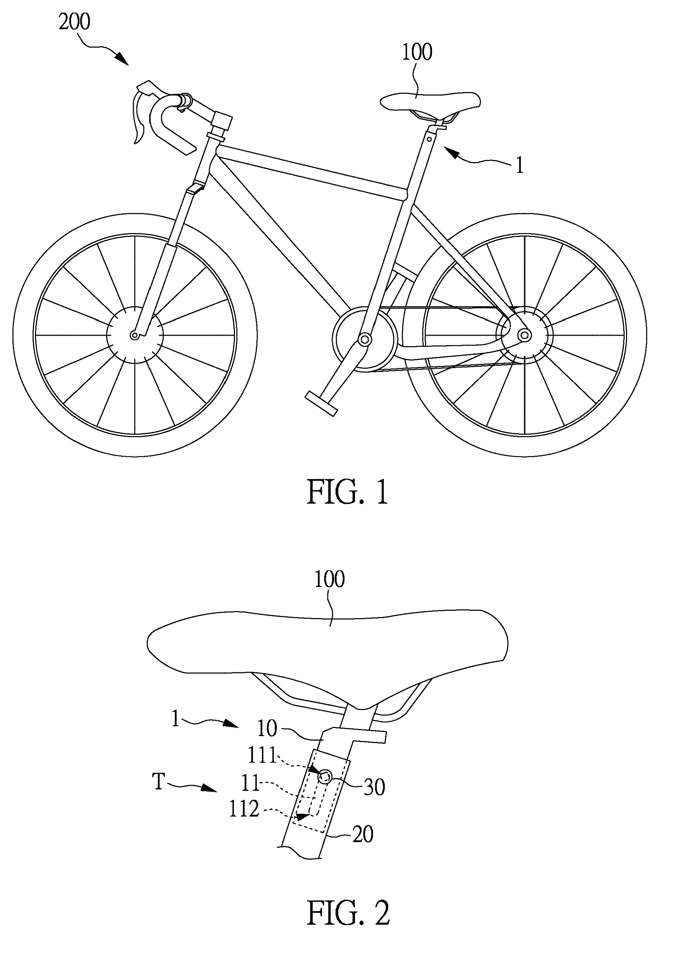

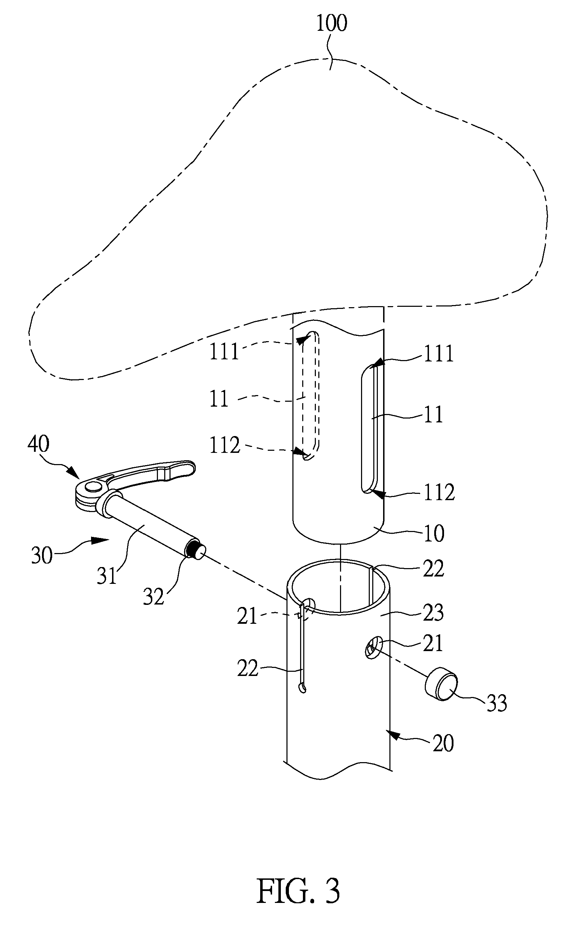

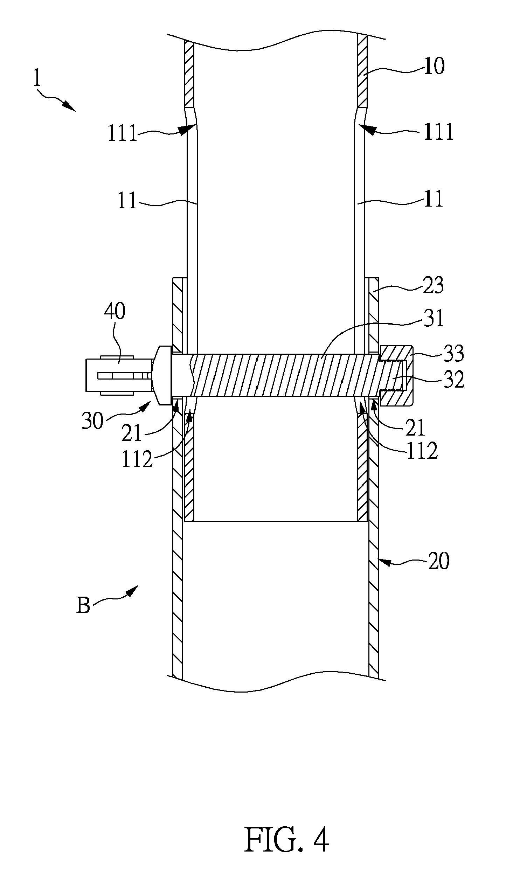

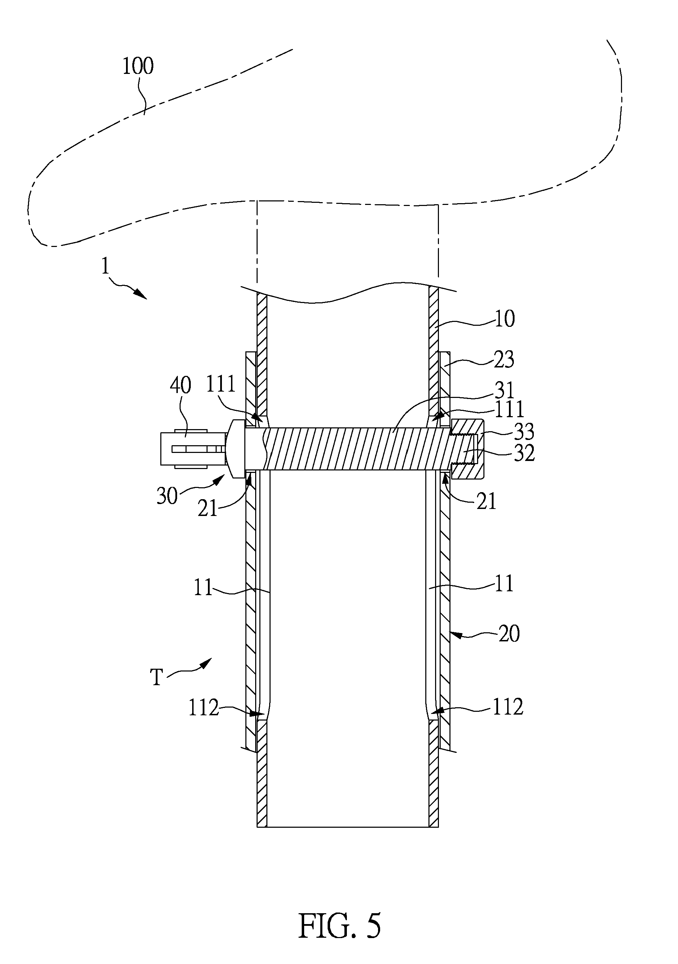

Please refer to FIG. 1 to FIG. 5, which illustrate a bicycle example with the seat post structure according to the first embodiment of the present invention. FIG. 1 illustrates a schematic drawing of a bicycle example of the first embodiment of the present invention. FIG. 2 illustrates a schematic drawing of the seat post structure of the first embodiment of the present invention. FIG. 3 illustrates an exploded perspective view of the seat post structure of the first embodiment of the present invention. FIG. 4 illustrates a schematic drawing of the seat post structure in the maximum position (raised up) of the first embodiment of the present invention. FIG. 5 illustrates a schematic drawing of the seat post structure in the minimum position (lowered down) of the first embodiment of the present invention.

As shown in FIG. 1 to FIG. 3, in the first embodiment, the bicycle 200 of the present invention includes a saddle 100 and a seat post structure 1. The saddle 100 is used for allowing user to sit. The seat post structure 1 is connected to the saddle 100, and the seat post structure 1 is used for allowing user to adjust the height of the saddle 100 according to the requirement of user. The seat post structure 1 includes a seat post 10, a seat post clamp 20, and a positioning part 30.

In the first embodiment of the present invention, the seat post 10 is connected to the saddle 100, and the seat post 10 includes two slots 11. Each of the slots 11 includes a first positioning end 111 and a second positioning end 112. The slot 11 is used for allowing the positioning part 30 to pass through, and the positioning part 30 can move to the first positioning end 111 or the second positioning end 112 in the slot 11. In addition, the slot 11 is a hollow structure for reducing the weight of the seat post 10, such that the bicycle 200 can be lighter.

The seat post clamp 20 of the present invention is a pipe, and the seat post 10 is connected to the seat post clamp 20 via a lifting way. The seat post clamp 20 includes two holes 21, two gaps 22, and a tube wall 23. The two holes 21 and the two gaps 22 are located on the tube wall 23. The two holes 21 are used for allowing the positioning part 30 to pass through. The gap space of the gap 22 of the present invention is between 1 millimeter and 3 millimeters; via the gap 22, when the tube wall 23 is pushed by an external force, the tube wall 23 can slightly shrink inwardly; however, the amount of the gap 22 of the present invention is not limited to two. The amount can be changed according to the requirement.

As shown in FIG. 3 and FIG. 4, the positioning part 30 of the present invention includes a positioning column 31, a fastening unit 32, and a corresponding fastening unit 33. The positioning column 31 is used for passing through the two slots 11 and the two holes 21. When the positioning column 31 passes through the two slots 11 and the two holes 21, the positioning column 31 will limit the movement of the seat post 10 such that the seat post 10 cannot rotate relative to the seat post clamp 20. The fastening unit 32 is connected to the positioning column 31, and the fastening unit 32 of the present invention is a bolt. The corresponding fastening unit 33 is a bolt nut for fastening to the fastening unit 32. Via the fastening between the corresponding fastening unit 33 and the fastening unit 32, the positioning part 30, the seat post clamp 20, and the seat post 10 can be combined with each other.

The tightening part 40 of the first embodiment is a curved rod with a tightening function. The tightening part 40 is connected to the positioning column 31 for tightening the tube wall 23, allowing the tube wall 23 to shrink slightly inwardly, whereby the positioning column 31 which passes through the two holes 21 and the two slots 11 is fastened and positioned by the shrinking tube wall 23, and the shrinking tube wall 23 also fastens to the seat post 10. Via the positioning of the positioning column 31 and the tube wall 23, and the shrinking of the tube wall 23, the tightening part 40, the positioning part 30, the seat post clamp 20, and the seat post 10 can be positioned in relation to each other such that the tightening part 40, the positioning part 30, the seat post clamp 20, and the seat post 10 are unlikely to change position if external force is applied. However, the design of the tightening part 40 is already disclosed in the field of the bicycle structure, so there is no need for further description.

As shown in FIG. 4 and FIG. 5, via the abovementioned structure, when the positioning part 30 passes through the two holes 21 and the two slots 11 and is located on the first positioning end 111, the seat post structure 1 forms a lowered status T. When the positioning part 30 passes through the two holes 21 and the two slots 11 and is located on the second positioning end 112, the seat post structure 1 forms a raised status B. In the seat post structure 1 of the lowered status T, the relative height of the saddle 100, which is connected to the seat post structure 1, is lower than that of the saddle 100, which is connected to the seat post structure 1 of the raised status B. Therefore, user can adjust the seat post structure 1 to cause the seat post structure 1 to switch between the raised status B and the lowered status T and thereby adjust the height of the saddle 100.

If user needs to install the seat post structure 1 of the first embodiment of the present invention, as shown in FIG. 3 and FIG. 4, user can plug the seat post 10 into the seat post clamp 20 such that the two slots 11 of the seat post 10 respectively align with the two holes 21 of the seat post clamp 20. Then user can cause the positioning column 31 of the positioning part 30 to pass through the two slots 11 and the two holes 21, whereby the positioning column 31 limits the seat post 10 such that the seat post 10 10 cannot rotate relative to the seat post clamp 20. Then user can use the bolt of the corresponding fastening unit 33 to fasten the bolt nut of the fastening unit 32, such that the positioning part 30, the seat post clamp 20, and the seat post 10 can be combined with each other stably.

If user needs to use the seat post structure 1 of the first embodiment of the present invention to raise the saddle 100, as shown in FIG. 3 and FIG. 4, user shall adjust the tightening part 40 to cause the tightening part 40 to release the tube wall 23 such that the tube wall 23 will not shrink to fasten the tightening part 40 and the seat post 10. Then user can apply force to raise the seat post 10 such that the positioning part 30 is on the second positioning end 112, such that the seat post structure 1 forms the raised status B and the height of the saddle 100 is increased. Then user can adjust the tightening part 40 such that the tightening part 40 tightens the tube wall 23 and causes the tube wall 23 to shrink slightly inward, whereby the positioning column 31 which passes through the hole 21 and the slot 11 are fastened and positioned by the shrinking tube wall 23, and the shrinking tube wall 23 is also fastened to the seat post 10. Via the positioning of the positioning column 31 and the tube wall 23, and the shrinking of the tube wall 23, the tightening part 40, the positioning part 30, the seat post clamp 20, and the seat post 10 can be positioned in relation to each other such that the tightening part 40, the positioning part 30, the seat post clamp 20, and the seat post 10 are unlikely to be moved by an external force, such that the saddle 100 can remain in the high position stably and the seat post 10 can be set to a minimum emergence height.

When user needs to use the seat post structure 1 of the first embodiment of the present invention to lower the saddle 100, as shown in FIG. 3 and FIG. 5, user will adjust the tightening part 40 to cause the tightening part 40 to release the tube wall 23 such that the tube wall 23 will not shrink to fasten the tightening part 40 and the seat post 10. Then user can apply a force to lower the seat post 10 such that the positioning part 30 is on the first positioning end 111, such that the seat post structure 1 forms the lowered status T and the height of the saddle 100 is decreased. Then user can adjust the tightening part 40 to cause the tightening part 40 to tighten the tube wall 23 such that the tube wall 23 shrinks slightly inward, whereby the positioning column 31 which passes through the hole 21 and the slot 11 are fastened and positioned by the shrinking tube wall 23, and the shrinking tube wall 23 is also fastened to the seat post 10. Via the positioning between the positioning column 31 and the tube wall 23, and the shrinking of the tube wall 23, the tightening part 40, the positioning part 30, the seat post clamp 20, and the seat post 10 can be positioned in relation to each other such that they are fixed in position and are unlikely to be moved by an external force, such that the saddle 100 can be in a lowered position stably.

Via the design of the seat post structure 1 of the present invention, user can quickly adjust the height of the saddle 100; in addition, during the process of adjusting the height of the saddle 100, the seat post 10 connected to the saddle 100 cannot rotate relative to the seat post clamp 20, such that the saddle 100 is aligned with the front of the bicycle 1 stably, allowing user to comfortably sit on the correct position on the saddle 100.

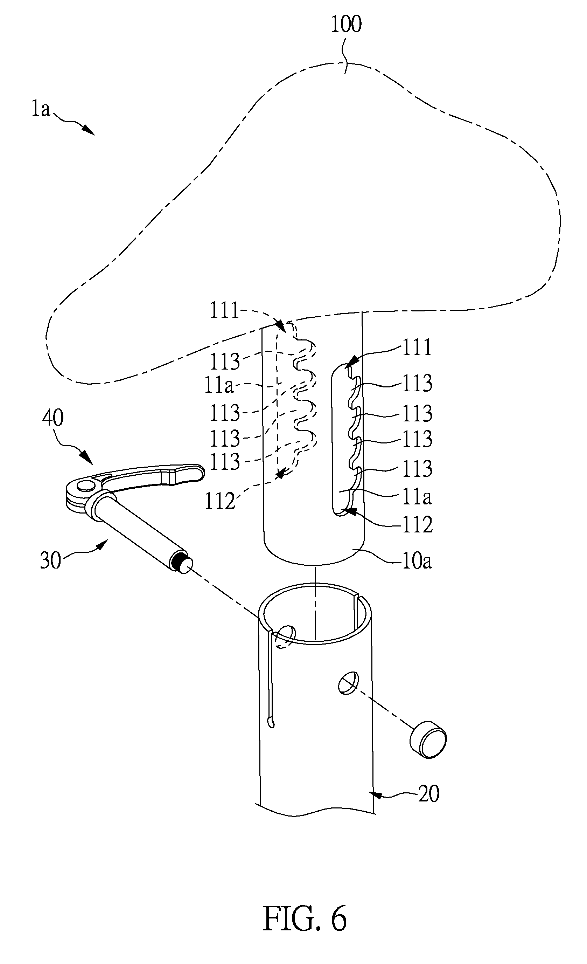

Please refer to FIG. 6, which illustrates the seat post structure according to the second embodiment of the present invention. FIG. 6 illustrates a schematic drawing of the seat post structure of the second embodiment of the present invention.

As shown in FIG. 6, the difference between the second embodiment and the first embodiment of the present invention is that, in the seat post structure 1a of the second embodiment, the slot 11a of the seat post 10a further includes at least four auxiliary positioning grooves 113. The four auxiliary positioning grooves 113 are located between the first positioning end 111 and the second positioning end 112; however, the amount of the auxiliary positioning grooves 113 is not limited to four and can be changed according to varying requirements. User can move the seat post 10a according to user's requirement, allowing the positioning part 30 to enter each of the auxiliary positioning grooves 113; or user can adjust the height of the seat post 10a such that the positioning part 30 is on the first positioning end 111 or the second positioning end 112. When user moves the positioning part 30 to a suitable position, user can use the tightening part 40 to fasten the seat post 10a, the seat post clamp 20, and the positioning part 30, allowing the saddle 100 connected to the seat post 10a to be stable. When the positioning part 30 is located on the first positioning end 111, the second positioning end 112, or in each auxiliary positioning groove 113, the saddle 100 will be fixed at a different height in order to satisfy user's needs of height for the saddle 100.

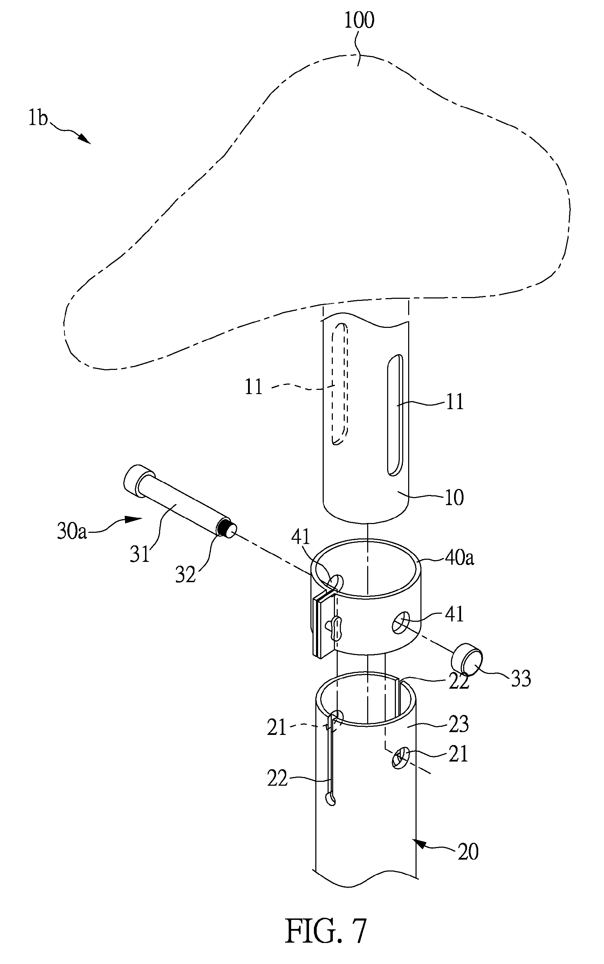

Please refer to FIG. 7, which illustrates the seat post structure according to the third embodiment of the present invention. FIG. 7 illustrates a schematic drawing of the seat post structure of the third embodiment of the present invention.

As shown in FIG. 7, the difference between the third embodiment and the first embodiment is that, in the seat post structure 1b of the third embodiment of the present invention, the tightening part 40a is a ring with a tightening function. The tightening part 40a includes two tightening part holes 41. The ring of the tightening part 40a is used for trapping the seat post clamp 20 to tighten the tube wall 23, and the positions of the two tightening part holes 41 are respectively corresponded to the two holes 21. Via the abovementioned structure, when the tightening part 40a traps the seat post clamp 20 and the seat post 10 is plugged into the seat post clamp 20, the positioning part 30a passes through the two tightening part holes 41, the two holes 21, and the two slots 11, allowing the seat post 10 to be positioned. In addition, when the ring of the tightening part 40a tightens the tube wall 23, the tube wall 23 is pressed by the tightening part 40a, shrinks inwardly, and fastens to the positioning part 30a.

Where a subclaim refers to a single previous claim, it is intended to refer to any preceding claim and in any combination thereof.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. A seat post structure (1, 1a, 1b), applied to a bicycle (200), the seat post structure (1, 1a, 1b) comprising:
a seat post (10, 10a), comprising two slots (11, 11a), wherein each of the slots (11, 11a) comprises a first positioning end (111) and a second positioning end (112);
a seat post clamp (20) connected with seat post (10, 10a) for fixture and lifting adjustment, wherein the seat post clamp (20) comprises two holes (21) at the position according to the two slots (11, 11a) on seat post (10, 10a); and
a positioning part (30, 30a), comprising:
a positioning column (31), for passing through the two slots (11, 11a) and the two holes (21);
a fastening unit (32) connected to the positioning column (31); and
a corresponding fastening unit (33) fastened to the fastening unit (32) ;
via the structure mentioned above, when the positioning part (30, 30a) passing through the two holes (21) and the two slots (11, 11a) is located on the first positioning end (111), the seat post structure (1, 1a, 1b) delivers the minimum height of seating (most lowered down condition); when the positioning part (30, 30a) passing through the two holes (21) and the two slots (11, 11a) is located on the second positioning end (112), the seat post structure (1, 1a, 1b) delivers the maximum height of seating (most raised up condition).

2. The seat post structure as claimed in Claim 1, wherein the seat post clamp (20) further comprises at least one gap (22) and a tube wall (23), the two holes (21) and the at least one gap (22) being located on the tube wall (23).

3. The seat post structure as claimed in Claim 2, further comprising a tightening part (40, 40a), wherein the tightening part (40, 40a) is used for tightening the tube wall (23) such that the positioning column (31) passing through the two holes (21) and the two slots (11, 11a) is hold within the tube wall (23) for positioning.

4. The seat post structure as claimed in Claim 3, wherein the slot (11a) further comprises at least one auxiliary positioning groove (113), the at least one auxiliary positioning groove (113) is located between the first positioning end (111) and the second positioning end (112).

5. The seat post structure as claimed in Claim 4, wherein an amount of the at least one gap (22) is two.

6. A bicycle (200), comprising:
a saddle (100); and
a seat post structure (1, 1a, 1b) connected with saddle (100), the seat post structure (1, 1a, 1b) comprising:
a seat post (10, 10a) connected with saddle (100), wherein the seat post (10, 10a) comprises two slots (11, 11a), each of the slots (11, 11a) comprising a first positioning end (111) and a second positioning end (112);
a seat post clamp (20) connected with seat post (10, 10a) for fixture and lifting adjustment, wherein the seat post clamp (20) comprises two holes (21) at the position according to the two slots (11, 11a) on seat post (10, 10a); and
a positioning part (30, 30a), comprising:
a positioning column (31) for passing through the two slots (11, 11a) and the two holes (21);
a fastening unit (32) connected to the positioning column (31); and
a corresponding fastening unit (33) fastened to the fastening unit (32) ;
via the structure mentioned above, when the positioning part (30, 30a) passing through the two holes (21) and the two slots (11, 11a) is located on the first positioning end (111), the seat post structure (1, 1a, 1b) delivers the minimum height of seating (most lowered down condition); when the positioning part (30, 30a) passing through the two holes (21) and the two slots (11, 11a) is located on the second positioning end (112), the seat post structure (1, 1a, 1b) delivers the maximum height of seating (most raised up condition).

7. The bicycle as claimed in Claim 6, wherein the seat post clamp (20) further comprises at least one gap (22) and a tube wall (23), the two holes (21) and the at least one gap (22) are located on the tube wall (23) .

8. The bicycle as claimed in Claim 7, wherein the seat post structure (1, 1a, 1b) further comprises a tightening part (40, 40a), the tightening part (40, 40a) is used for tightening the tube wall (23) such that the positioning column (31) passing through the two holes (21) and the two slots (11, 11a) is hold within the tube wall (23) for positioning.

9. The bicycle as claimed in Claim 8, wherein the slot (11a) further comprises at least one auxiliary positioning groove (113), the at least one auxiliary positioning groove (113) is located between the first positioning end (111) and the second positioning end (112).

10. The bicycle as claimed in Claim 9, wherein an amount of the at least one gap (22) is two.
